# EUROPEAN PATENT APPLICATION

(11) **EP 4 789 942 A1**
(43) Date of publication of application: **12.08.2026**
(21) Application number: 26156440.5
(22) Date of filing: 04.02.2026
(51) Int. Cl.: B61D 15/00, B60F 1/04, B61F 5/52, B61K 5/02, E01B 29/00

(54) **RAILWAY CAR FOR RAILWAY TRACK BALLAST MAINTENANCE**

(30) Priority: 05.02.2025 IT 202500002187
(71) Applicant: SRT SOCIETA' A RESPONSABILITA' LIMITATA CON SOCIO UNICO, 00196 Roma (IT)
(72) Inventor: BORGI, Guido, 61032 Fano (PU) (IT)
(74) Representative: PGA S.p.A.

(57) **Abstract**

The present invention concerns a railway car (60) comprising a railway bogie (1) having: a frame (2) connectable to a frame of the railway car (60), at least one axle (3) engaged to the frame (2) of the railway bogie, a movement system (10) carried by the frame (2) of the railway bogie (1) and configured to contact the ground (S) and allow the movement of the railway bogie (1).

## Description

### FIELD OF THE INVENTION

The present invention relates to a railway car for railway track ballast maintenance, comprising at least one railway bogie provided with a movement system configured to allow movement both on railway track, by means of railway wheels, and off railway track, by means of a traction device in contact with the ground.

For example, the invention may find advantageous application in the sector of construction and maintenance of railway infrastructures, in particular for carrying out operations of laying, replacement and maintenance of railway tracks which require the movement of the vehicle in areas both provided with rails and in zones without already installed railway tracks.

### BACKGROUND ART

The construction or maintenance of railway lines is generally carried out by means of vehicles composed of a plurality of cars provided with bogies, idle or motorized, which allow the movement of the vehicle on a railway track. The construction and/or maintenance of a railway line may require the use of equipment placed outside the railway track, requiring the movement of at least a part of the vehicle in areas without rails; for example, during the laying of a new railway track it is required that the motorized head car moves directly on the ground or on the ballast to bring the rail laying equipment to the area of interest. For this reason, known vehicles are provided with a head machine or car comprising traditional wheels, that is, wheels consisting of a rim and a tire, or tracks. Such machines are configured to travel on the ground or on the ballast beyond the railway track, for example to drag part of the vehicle resting on the rails along the already laid railway track. The Applicant has noted how such vehicles are bulky and expensive, requiring additional motorization configured to travel only outside the railway track.

It is further known from PCT patent application no. WO 2010/112107 A1 a railway vehicle comprising a head car comprising motorized trucks to move on the rails and an additional tracked motorization, separate from the truck. The tracks are connected to the frame of the car and are vertically adjustable for lifting the car from the rails and movement on the ground, in zones where the rails are absent. The tracks are connected to the frame by means of hydraulic cylinders which allow the movement of the tracks with respect to the ground. The Applicant has noted how the solution described above is not free from limitations. In fact, the car has a bulky and complex structure, negatively impacting the complexity, bulk and costs of the entire vehicle.

It is known from patent application no. US5727474A a freight car for storing bulk material comprising a load-bearing frame supported on railway bogies and two bogies off railway track longitudinally spaced and vertically adjustable independently.

It is then known from patent application no. WO 2007124944 A1 a railway transport device provided with railway wheels for travel on railway track and a chain or wheel transmission for travel on terrain, with capacity for reciprocal vertical adjustment between the two systems. The vehicle is designed to be sufficiently compact to be stowed in a railway car.

It is also known from patent application no. EP 1378380 A1 a road-railway shunting locomotive with reversible driver's cabin and capacity to be towed at high speed like a traditional car. A driving part, consisting of pneumatic wheels, is vertically adjustable within the railway part.

It is further known from patent application no. CN212895724U a car comprising two motorized trucks configured to move on the rails and additional tracked motorizations. Each truck comprises a frame carrying a pair of axles: the frame of the truck is fixed to an additional frame interposed between the frame of the railway car and the frame of the truck. The additional frame carries four tracks, two front tracks and two rear tracks, between which a pair of axles of the truck are interposed.

The Applicant has noted how also this solution is not free from limitations, presenting a bulky and complex structure, which negatively impacts the complexity, bulk and costs of the entire vehicle.

### OBJECT OF THE INVENTION

The object of the invention is to solve at least one of the drawbacks and/or limitations of the known solutions.

A first object of the invention is to provide a railway car comprising a railway bogie which is compact and of simple construction, which at the same time is mobile both on a railway track and in zones without rails. It is then an object of the invention to provide a railway car with a railway bogie capable of allowing the movement of one or more railway cars in a rapid and safe manner. It is an object of the invention to provide a railway car with a railway bogie that may be installed on standard railway cars, without requiring additional infrastructures.

It is also an object of the invention to provide a railway car having a simple, compact and robust structure. These objects and still others, which will appear more clearly from the following description, are substantially achieved by a railway car comprising a railway bogie according to one or more of the accompanying claims and/or of the following aspects.

### SUMMARY

In a 1st aspect is provided a railway bogie (1) for the movement of railway cars (60), said railway bogie (1) comprising:
a frame (2) connectable to a frame of a railway car (60),
at least one axle (3) engaged to the frame (2) of the railway bogie, said axle (3) comprising a shaft (4) on which is fixed at least one railway wheel configured to contact and move along a rail of a railway line.

In a 2nd aspect according to the preceding aspect the railway bogie (1) comprises a movement system (10) configured to contact the ground (S) and allow the movement of the railway bogie (1).

In a 3rd aspect according to the preceding aspect the movement system (10) is carried by the frame (2) of the railway bogie (1).

In a 4th aspect according to any one of the two preceding aspects the movement system (10) is directly engaged to the frame (2) of the railway bogie (1).

In a 5th aspect according to any one of the three preceding aspects the movement system (10) is only carried (optionally directly constrained) by the frame (2) of the railway bogie (1).

In a 6th aspect according to any one of the four preceding aspects at least a part of the movement system (10) is movable relative to the axle (3).

In a 7th aspect according to any one of the preceding aspects at least a part of the movement system (10) is movable in approach and withdrawal with respect to the frame (2) of the same railway bogie (1).

In an 8th aspect according to any one of the five preceding aspects at least a part of the movement system (10), in condition of use of the railway bogie, is configured to move in approach and withdrawal with respect to the ground (S).

In a 9th aspect according to any one of the six preceding aspects at least a part of the movement system (10), in condition of use of the railway bogie, is configured to move along a vertical direction.

In a 10th aspect according to any one of the preceding aspects from the 2nd to the 9th at least one of the axle (3) and the movement system (10) of the railway bogie (1) is configured to define the following operative positions:
- a first operative position in which the movement system (10) is configured to be spaced from the ground,
- a second operative position in which the movement system (10) is configured to contact the ground to space the axle (3) from the ground.

In an 11th aspect according to the preceding aspect the axle (3), optionally the at least one railway wheel of the axle, in the first operative position, is configured to contact and move along at least one rail of a railway line.

In a 12th aspect according to any one of the two preceding aspects the axle (3), optionally the at least one railway wheel of the axle, in the second operative position, is configured to be spaced from the ground and from the at least one rail of a railway line.

In a 13th aspect according to any one of the three preceding aspects the movement system (10), in the second operative position, is configured to support the entire railway bogie (1).

In a 14th aspect according to any one of the preceding aspects the movement system (10) comprises a traction device (11) configured to contact the ground (S) and allow the movement of the railway bogie (1).

In a 15th aspect according to the preceding aspect the traction device (11) comprises at least one of: at least one traditional wheel, at least one track.

In a 16th aspect according to any one of the two preceding aspects the traction device (11) is engaged to the frame (2) of the railway bogie.

In a 17th aspect according to any one of the three preceding aspects the traction device (11) comprises a plurality of tracks (12).

In an 18th aspect according to any one of the four preceding aspects at least one of the axle (3) and the traction device (11) of the movement system (10) is movable in approach and withdrawal with respect to the frame (2) to define the first and second operative position.

In an 18th aspect according to any one of the five preceding aspects the traction device (11) of the movement system (10) is movable in approach and withdrawal with respect to the frame (2), optionally to define said first and second operative position.

In a 19th aspect according to any one of the six preceding aspects only the traction device (11) is movable in approach and withdrawal with respect to the frame (2).

In a 20th aspect according to any one of the seven preceding aspects the axle (3) is configured to not substantially vary its own distance from the frame (2) of the railway bogie (1).

In a 21st aspect according to any one of the eight preceding aspects the traction device (11) is movable with respect to the frame along a direction, in use, vertical.

In a 22nd aspect according to any one of the preceding aspects from the 10th to the 21st the movement system (10) is configured to define the first and the second operative position.

In a 23rd aspect according to the preceding aspect when dependent on any one of the aspects from the 14th to the 22nd the traction device (11), in the first operative position, is configured to be spaced from the ground.

In a 24th aspect according to any one of the aspects from the 14th to the 23rd the traction device (11), in the second operative position, is configured to contact the ground to space the axle (3) from the ground.

In a 25th aspect according to any one of the aspects from the 14th to the 24th the movement system (10), in the second operative position, is configured to lift the axle (3) with respect to the ground.

In a 26th aspect according to any one of the aspects from the 14th to the 25th the railway bogie (1), in the second operative position of the movement system, is in contact with the ground only by means of the traction device (11).

In a 27th aspect according to any one of the aspects from the 2nd to the 26th the movement system (10) comprises at least one actuator (13) engaged, on one side, to the frame (2) of the railway bogie (1) and, on the other side, to the traction device (11).

In a 28th aspect according to the preceding aspect the actuator (13) is configured to move the traction device in approach and withdrawal with respect to the frame (2) of the railway bogie.

In a 29th aspect according to any one of the two preceding aspects the actuator (13) connects the traction device (11) to the frame (2).

In a 30th aspect according to any one of the two preceding aspects the actuator (13) comprises at least one of: a hydraulic cylinder, a pneumatic cylinder, an electric motor.

In a 31st aspect according to any one of the preceding aspects the frame (2) extends longitudinally between a first and a second longitudinal portion (2a, 2b).

In a 32nd aspect according to any one of the preceding aspects the frame (2) has a length defined by the distance between the first and the second longitudinal portion (2a, 2b).

In a 33rd aspect according to the preceding aspect the length of the frame is comprised between 2500 and 6000 mm, optionally between 3500 and 5000 mm.

In a 34th aspect according to any one of the preceding aspects the frame (2) has a first and second side (2c, 2d).

In a 35th aspect according to the preceding aspect the frame (2) has a width defined by the maximum distance present between the first and the second side (2c, 2d).

In a 36th aspect according to the preceding aspect the width of the frame is comprised between 1500 and 3000 mm, optionally between 1800 and 2500 mm.

In a 37th aspect according to any one of the three preceding aspects the first and second side (2c, 2d) connect the first and second longitudinal portion (2a, 2b) of the frame (2).

In a 38th aspect according to any one of the preceding aspects the frame (2) comprises a base body (20) configured to be constrained to the frame of a railway car.

In a 39th aspect according to the preceding aspect the base body (20) of the frame (2) lies substantially on a plane.

In a 40th aspect according to any one of the two preceding aspects the base body (20) extends in length between the first and second longitudinal portion (2a, 2b) of the frame (2).

In a 41st aspect according to any one of the three preceding aspects the base body (20) extends in width between the first and the second side (2c, 2d) of the frame (2).

In a 42nd aspect according to any one of the four preceding aspects the base body (20) defines the first and second longitudinal portion (2a, 2b) of the frame (2).

In a 43rd aspect according to any one of the five preceding aspects the base body (20) defines the first and the second side (2c, 2d) of the frame (2).

In a 44th aspect according to any one of the preceding aspects from the 38th to the 43rd the base body (20) extends in thickness between an upper surface (20') and a lower surface (20").

In a 45th aspect according to the preceding aspect the lower and upper surface of the base body are opposite to each other.

In a 46th aspect according to any one of the two preceding aspects the lower surface (20") of the base body, in condition of use of the railway bogie (1), is configured to be facing towards the ground (S).

In a 47th aspect according to any one of the three preceding aspects the thickness of the base body (20) is comprised between 180 and 500 mm, optionally between 200 and 450 mm.

In a 48th aspect according to any one of the aspects from the 38th to the 47th the frame (2) comprises at least one support (21) emerging from the base body (20) and configured to engage the axle (3).

In a 49th aspect according to the preceding aspect the support (21) is configured to emerge, in use, from the base body (20) in direction of the ground (S).

In a 50th aspect according to any one of the preceding aspects the at least one axle (3) comprises a first and a second axle.

In a 51st aspect according to the preceding aspect the first and second axle are respectively engaged at the first and second longitudinal portion (2a, 2b) of the frame (2).

In a 52nd aspect according to any one of the aspects from the 38th to the 51st the at least one axle, optionally the first and second axle, are disposed, in use, below the base body (20) of the frame (20) of the railway bogie.

In a 53rd aspect according to any one of the aspects from the 38th to the 52nd the at least one axle, optionally the first and second axle, are facing the base body (20) of the frame (1) of the railway bogie.

In a 54th aspect according to any one of the aspects from the 38th to the 53rd the at least one support (21) comprises a first and second support.

In a 55th aspect according to the preceding aspect the first support emerges from the base body (20) at the first longitudinal portion (2a) while the second support emerges from the base body (20) at the second longitudinal portion (2b).

In a 56th aspect according to any one of the aspects 48th to 55th the at least one support (21) emerges from the lower surface (20") of the base body (20), from the side opposite to the upper surface (20') of the same base body (20).

In a 57th aspect according to any one of the aspects from the 38th to the 56th the base body (20) comprises:
- a central portion (22) configured to be constrained to the frame of a railway car,
- a first and a second shoulder (23, 24) opposite to each other and positioned laterally to the central portion (22).

In a 58th aspect according to the preceding aspect the first and second shoulder (23, 24) are opposite to the central portion.

In a 59th aspect according to any one of the two preceding aspects the first and second shoulder (23, 24) extend in length between the first and the second longitudinal portion of the frame (2).

In a 60th aspect according to any one of the three preceding aspects the first and second shoulder (23, 24) define the first and second longitudinal portion (2a, 2b) of the frame (2).

In a 61st aspect according to any one of the four preceding aspects the first and second shoulder (23, 24) define the first and second side (2c, 2d) of the base body (20).

In a 62nd aspect according to any one of the five preceding aspects the first and second shoulder (23, 24) are joined in a single piece to the central portion (22).

In a 63rd aspect according to any one of the preceding aspects the at least one axle (3), during a condition of use of the railway bogie in which the axle moves along the railway line, is configured to rotate around an axis of rotation (X).

In a 64th aspect according to the preceding aspect the axis of rotation (X) of the axle (3) passes through the center of the shaft (4).

In a 65th aspect according to any one of the two preceding aspects the axis of rotation (X) of the axle (3) is substantially parallel to the plane of lying of the base body (20).

In a 66th aspect according to any one of the three preceding aspects the axis of rotation of the first axle is parallel to the axis of rotation of the second axle.

In a 67th aspect according to any one of the preceding aspects the shaft (4) extends longitudinally, optionally in length, between a first and a second end portion (4a, 4b).

In an aspect 67bis according to any one of the preceding aspects the at least one axle comprises a first and a second railway wheel (R1, R2) fixed on the shaft (4).

In a 68th aspect according to the preceding aspect the first wheel (R1) is fixed at the first end portion (4a) of the shaft (4) while the second wheel (R2) is fixed at the second end portion (4b) of the shaft (4).

In a 69th aspect according to any one of the three preceding aspects the axle (3) is constrained to the frame (2) of the railway bogie (1) by means of the shaft (4).

In a 70th aspect according to any one of the four preceding aspects the first and second end portion (4a, 4b) of the shaft (4) are constrained to the support (21).

In a 71st aspect according to any one of the five preceding aspects the first and second end portion are disposed, in use, respectively below the first and second shoulder (23, 24) of the base body (20).

In a 72nd aspect according to any one of the preceding aspects the movement system (10) is constrained to the base body (20).

In a 73rd aspect according to any one of the preceding aspects the movement system (10) is constrained to at least one of: the central portion, the first shoulder and the second shoulder.

In a 74th aspect according to any one of the aspects from the 38th to the 73rd at least a part of the movement system (10), optionally the traction device (11), is movable in approach and withdrawal with respect to the base body (20).

In a 75th aspect according to any one of the aspects from the 38th to the 74th at least a part of the movement system (10), optionally the traction device (11), is movable in approach and withdrawal with respect to the base body (20) along a direction substantially orthogonal to the plane of lying of the base body (20).

In a 76th aspect according to any one of the aspects from the 38th to the 75th the movement system (10) is constrained to the base body (20) at the central portion (22).

In a 77th aspect according to any one of the aspects from the 38th to the 76th the traction device (11) is disposed, at least in part, below the central portion (22) of the base body (20).

In a 78th aspect according to any one of the preceding aspects the traction device (11) is interposed between the first and second axle.

In an aspect 78bis according to any one of the preceding aspects from the 50th to the 78th the movement system (10) is interposed between the first and second axle.

In an aspect 78ter according to any one of the preceding aspects from the 50th to the 78bis the traction device (11) is interposed between the first and second axle.

In an aspect 78quater according to any one of the preceding aspects from the 50th to the 78ter the movement system (10), optionally the traction device (11), is configured to maintain substantially a same minimum distance from the at least one axle (3), optionally from the first and second axle.

In an aspect 78quinquies according to any one of the preceding aspects from the 50th to the 78quater the first and second axle are configured to rotate around respective axes which define a plane, in which the traction device (11) of the movement system (10) is movable along a direction substantially orthogonal to said plane defined by said first and second axle.

In an aspect 78sexies according to any one of the preceding aspects at least a part of the movement system (10), optionally the traction device (11), is movable relative to the frame (2) of the railway bogie:
- in approach and withdrawal with respect to the frame (2), optionally along a direction substantially orthogonal to a plane of lying of the frame (2),
- by rotation with respect to the frame (2), optionally along a vertical axis (Y) orthogonal to a plane of lying of the frame (2).

In an aspect 78septies according to any one of the preceding aspects the traction device (11) is movable both by sliding and by rotation relative to the frame (2) of the railway bogie (1).

In an aspect 78octies according to any one of the preceding aspects from the 10th to the aspect 78septies the traction device (11) is movable by rotation with respect to the frame (2) of the railway bogie (1) at least in the second operative position of the movement system (10), optionally when the traction device (11) is in contact with the ground (S).

In an aspect 78novies according to any one of the three preceding aspects the vertical axis (Y) of rotation of the traction device (11) is substantially parallel to the direction of movement of the same in approach and withdrawal with respect to the frame (2).

In an aspect 78decies according to any one of the four preceding aspects the movement system (10) comprises at least one auxiliary actuator (14) configured to rotate the traction device (11) with respect to the frame.

In an aspect 78undecies according to the preceding aspect the auxiliary actuator (14) is connected, on one side, to the traction device (11) and, on the other side, to the frame (2) of the railway bogie, optionally to the base body (20).

In an aspect 78duodecies according to any one of the two preceding aspects the auxiliary actuator (14) comprises at least one of: a hydraulic cylinder, a pneumatic cylinder, an electric motor.

In a 79th aspect according to any one of the preceding aspects at least one axle (3) of the railway bogie (1) is motorized.

In an 80th aspect according to the preceding aspect at least one axle (3) of the railway bogie (1) is motorized by means of at least one motor.

In an 81st aspect according to the preceding aspect the motorization motor of the axle comprises at least one of: an electric motor, a hydraulic motor fed by at least one endothermic motor.

In an aspect 81-bis according to any one of the preceding aspects when dependent on the 14th aspect the traction device (11) comprises a plurality of tracks (12) side by side and aligned along a direction parallel to an axis of rotation (X) of the axle (3), optionally to axes of rotation of the first and of the second axle.

In an aspect 81-ter according to any one of the preceding aspects when dependent on the 14th aspect said plurality of tracks (12) has one or more left tracks (12a) and one or more right tracks (12b) at opposite sides of the frame (2).

In an aspect 81-quater according to the preceding aspect the frame (2) extends longitudinally between a first and a second longitudinal portion (2a, 2b), in which the frame (2) has a first and second side (2c, 2d) which connect the first and second longitudinal portion (2a, 2b) of the frame (2),
wherein the first and second axle are respectively engaged at the first and second longitudinal portion (2a, 2b) of the frame (2),
wherein said one or more left tracks (12a) are at the first side (2c) of the frame (2),
and wherein said one or more right tracks (12b) are at the second side (2d) of the frame (2).

In an aspect 81-quinquies according to any one of the three preceding aspects the railway bogie (1) comprises a plurality of drive motors (30), each of which associated with at least one respective track of said plurality of tracks (12).

In an aspect 81-sexies according to the preceding aspect when dependent on aspect 81-ter said plurality of drive motors (30) comprises:
- one or more left drive motors (30a) associated with a respective one of said one or more left tracks (12a),
- one or more right drive motors (30b) associated with a respective one of said one or more right tracks (12b).

In an aspect 81-septies according to any one of the three preceding aspects said one or more left tracks (12a) comprise two or more left tracks mutually adjacent and aligned parallel to axes of rotation (X) of the first and of the second axle (3).

In an aspect 81-octies according to any one of the four preceding aspects said one or more right tracks (12b) comprise two or more right tracks mutually adjacent and aligned parallel to axes of rotation of the first and of the second axle (3).

In an aspect 81-novies according to any one of the five preceding aspects said plurality of tracks (12) define a contact surface having a dimension equal to or greater than a minimum distance that occurs between the first and the second side (2c, 2d),
wherein said minimum distance is measured parallel to the axes of rotation (X) of the first and of the second axle (3).

In an aspect 81-decies according to any one of the preceding aspects each track of said plurality of tracks (12) develops in length parallel to a longitudinal extension direction (LG) of the railway bogie (1) which joins the first axle to the second axle (3),
wherein said length of each track is greater than 2/3, optionally greater than 3/4, of a minimum distance between the first axle and the second axle of the railway bogie measured parallel to the longitudinal extension direction (LG) of the railway bogie.

In an 82nd aspect is provided a railway car (60) comprising:
- at least one frame (61) configured to support one or more components of the railway car,
- at least one railway bogie (1) according to any one of the preceding aspects, constrained to the frame (61) of the railway car.

In an 83rd aspect according to the preceding aspect the frame (2) of the railway bogie (1) is constrained to the frame (61) of the railway car (60), optionally by means of a mechanical joint.

In an 84th aspect according to any one of the two preceding aspects the movement system (10) is only constrained to the frame (2) of the railway bogie (1).

In an 85th aspect according to any one of the three preceding aspects the movement system (10) is not constrained to the frame (61) of the railway car (60).

In an 86th aspect according to any one of the four preceding aspects the railway car (60) comprises at least two railway bogies, in which at least one of said railway bogies is in accordance with any one of the aspects from the 1st to the 81st.

In an 87th aspect according to any one of the five preceding aspects the frame (61) of the railway car (60) lies substantially on a plane.

In an 88th aspect according to any one of the five preceding aspects the frame (61) of the railway car (60) extends in length along a longitudinal extension direction between a first and a second end portion (61a, 61b).

In an 89th aspect according to the preceding aspect the railway car (60) comprises at least one railway bogie placed in correspondence of both the first and the second longitudinal end portion of the frame (61) of the railway car.

In a 90th aspect according to the preceding aspect at least the railway bogie (1) disposed in correspondence of the first end portion of the frame (61) of the railway car (60) is according to any one of the aspects from the 1st to the 81st.

In a 91st aspect according to any one of the aspects from the 82nd to the 90th the frame (61) of the railway car (60) is configured to be interposed between the railway bogie (1) and the components configured to be supported by the frame.

In a 92nd aspect according to any one of the aspects from the 82nd to the 91st the frame is configured to support, from the side opposite to the railway bogie, at least one of: one or more equipment for the movement of components of a railway line, a box configured to contain a load, a cabin configured to contain accessories of a railway car (optionally at least one of: safety devices, car driving device, monitoring device, car maneuvering devices and/or car equipment).

In a 93rd aspect according to any one of the aspects from the 82nd to the 92nd the railway bogie (1) of the railway car (60) is of the type comprising an axle (3) comprising the first and the second wheel, in which the car is configured to move along a railway track of a railway line.

In an aspect 93-bis according to any one of the preceding aspects from the 82nd to the 93rd when dependent on aspect 81-ter, the railway car comprises a control unit (50) connected to said plurality of drive motors (30) and configured to command said one or more left drive motors (30a) in an independent manner with respect to said one or more right drive motors (30b).

In an aspect 93-ter according to the preceding aspect the control unit (50) is configured to command simultaneously said one or more left drive motors (30a) and said one or more right drive motors (30b) to determine a scrolling of said one or more left tracks (12a) in opposite direction with respect to a direction of scrolling of said one or more right tracks (12b).

In an aspect 93-quater according to any one of the preceding aspects from the 82nd to the aspect 93-ter when dependent on aspect 81-sexies, the railway car comprises a/the control unit (50) configured to:
- command said one or more left drive motors (30a) to determine a scrolling of said two or more left tracks in a same direction,
- command said one or more right drive motors (30b) to determine a scrolling of said two or more right tracks in a same direction.

In an aspect 93-sexies according to any one of the preceding aspects from the 82nd to the aspect 93-quinquies, the railway car comprises one or more manipulators and/or a radio control configured to generate command signals for the movement of each track of said plurality of tracks (12).

In an aspect 93-septies according to the preceding aspect the control unit (50) is connected to said one or more manipulators and/or to the radio control and is configured to:
- receiving the command signal generated by said one or more manipulators and/or by the radio control,
- determining a control signal as a function of the received command signal,
- moving each track of said plurality of tracks (12) as a function of the control signal.

In an aspect 93-octies according to the preceding aspect moving each track of said plurality of tracks (12) as a function of the control signal comprises at least one of:
- commanding a movement of said tracks in approach and in withdrawal with respect to the frame (2) of the railway bogie (1),
- commanding the auxiliary actuator (14) to determine a rotation of said tracks around a/the vertical axis (Y) orthogonal to the plane of lying of the frame (2) of the railway bogie (1),
- commanding the drive motors (30) to determine an advancement of the railway car on the railway ballast.

In an aspect 93-novies according to any one of the preceding aspects from the 82nd to the aspect 93-octies the railway car comprises a graphical interface (31) configured to display an image representative of an ideal trajectory that the rails should assume.

In an aspect 93-decies according to any one of the preceding aspects from the 82nd to the aspect 93-novies the railway car comprises a measurement base (36) placed on the rails and configured to generate a measurement signal representative of a railway track positioned on the railway ballast.

In an aspect 93-undecies according to the two preceding aspects a/the control unit (50) is configured to:
- receiving the measurement signal from the measurement base (36),
- determining, as a function of the measurement signal, a measured trajectory of the rails,
- comparing the measured trajectory with the ideal trajectory.

In an aspect 93-duodecies according to the preceding aspect, the control unit (50) is configured to command the auxiliary actuator (14) and/or the drive motors (30) as a function of a difference between the measured trajectory and the ideal trajectory.

In an aspect 93-terdecies according to any one of the preceding aspects from the 82nd to the aspect 93-duodecies the railway car comprises a lifting unit (35) carried by the frame (61) of the railway car and configured to move vertically and transversely the railway track to correct a positioning of the rails (2, 3).

In an aspect 93-quaterdecies according to the preceding aspect the lifting unit (35) comprises:
- a first vertical cylinder (35a) configured to lift or lower a first rail,
- a second vertical cylinder (35b) configured to lift or lower a second rail, and
- a transverse cylinder (35c) configured to move transversely a sleeper to which the first and the second rail are fixed.

In an aspect 93-quindecies according to any one of the preceding aspects from the 82nd to the aspect 93-quaterdecies the railway car comprises:
- a sleeper replacement system configured to remove existing sleepers from the railway track and position new sleepers,
- a rail replacement system configured to remove existing rails and position new rails,
wherein a/the control unit (50) is connected to the sleeper replacement system and/or to the rail replacement system to manage the removal and laying operations of rails and sleepers.

In a 94th aspect is provided a use of the railway bogie (1) according to any one of the aspects from the 1st to the aspect 81-decies for the movement of one or more railway cars (60) along a railway track, optionally for the construction and/or renewal and/or removal of a railway line.

In a 95th aspect there is provided a method for the movement of a railway car (60) according to any one of the aspects from the 82nd to the aspect 93-quindecies.

In a 96th aspect according to the preceding aspect the method comprises the steps of:
- disposing the railway car (60) on a railway line in such a way that the at least one wheel of the axle (3) is in support on at least one rail,
- moving the railway car (60) on the at least one rail, along the railway line.

In a 96th aspect according to the preceding aspect the movement system (10) of at least one railway bogie (1) according to any one of the aspects from the 1st to the 81-decies, during the movement of the railway car on the rail is spaced from the rail.

In a 97th aspect according to any one of the three preceding aspects the method further comprises the following steps:
- placing in contact the movement system (10) of a railway bogie (1) with the ground (S) in such a way as to space from the ground the axle (3) of said railway bogie,
- actuating the movement system (10) to allow the same to move the railway car, optionally along a section of or with respect to the railway line.

In a 98th aspect according to the preceding aspect the step of placing in contact the movement system (10) with the ground (S) comprises the placing on the ground of the traction device (11).

In a 99th aspect according to any one of the two preceding aspects the step of actuating the movement system (10) comprises a step of activation of the traction device (11) to allow the latter to move the railway car (60), optionally on the ground.

In a 100th aspect according to any one of the aspects from the 95th to the 99th the method comprises the steps of:
- moving the railway car (60) on the at least one rail, along the railway line, in which the railway car (60) comprises at least one railway bogie (1) according to any one of the aspects from the 1st to the aspect 81-decies, in which during said movement step the axle (3) of the railway bogie is in contact with the rail while the movement system is spaced from the rail and from the ground,
- disposing the railway bogie (1) of the railway car (60) at a terminal portion (R') of the rail in such a way that at least the movement system (10), optionally the traction device (11), of the railway bogie (1) is facing the ground at a zone in which the rail is not present,
- subsequently, moving the movement system (10) to bring at least a part of the latter, optionally the traction device (11), in contact with the ground and lift the axle (3) of said railway bogie with respect to the rail,
- subsequently, actuating the movement system, optionally the traction device (11), in such a way as to move the entire railway car (60) with respect to the rail.

In a 101st aspect is provided a vehicle comprising a plurality of railway cars placed one consecutively to the other along a movement trajectory of the vehicle.

In a 102nd aspect according to the preceding aspect the plurality of railway cars are constrained to one another at respective longitudinal end portions, optionally by means of an articulated joint.

In a 103rd aspect according to any one of the two preceding aspects the railway vehicle comprises at least one head car in accordance with the railway car in accordance with any one of the aspects from the 82nd to the aspect 93-quindecies.

### BRIEF DESCRIPTION OF THE DRAWINGS

Some embodiments and some aspects of the invention will be described hereinafter with reference to the accompanying drawings, provided for indicative purposes only and therefore not limitative in which:

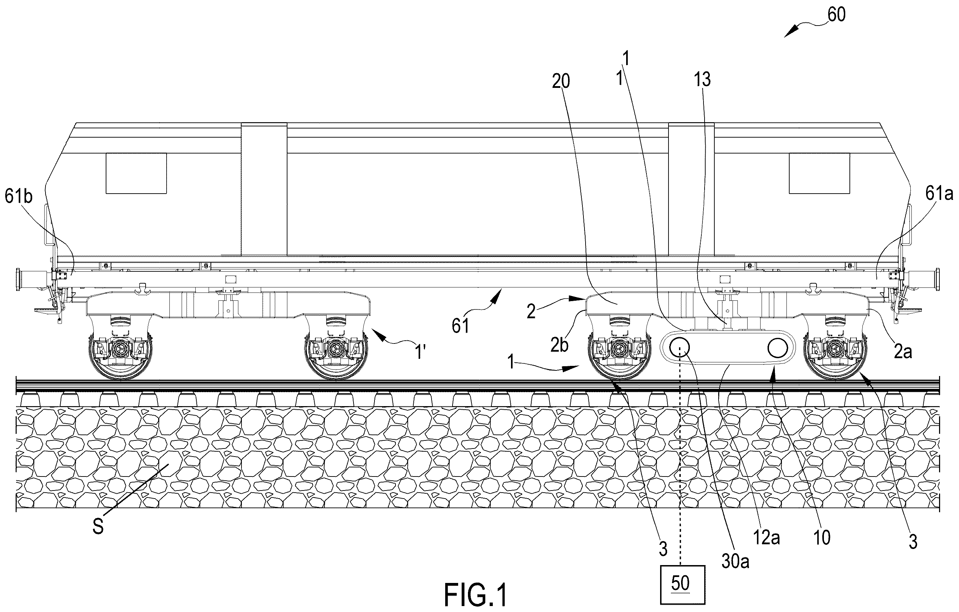

- Figure 1 is a perspective view of a railway car comprising at least one railway bogie;

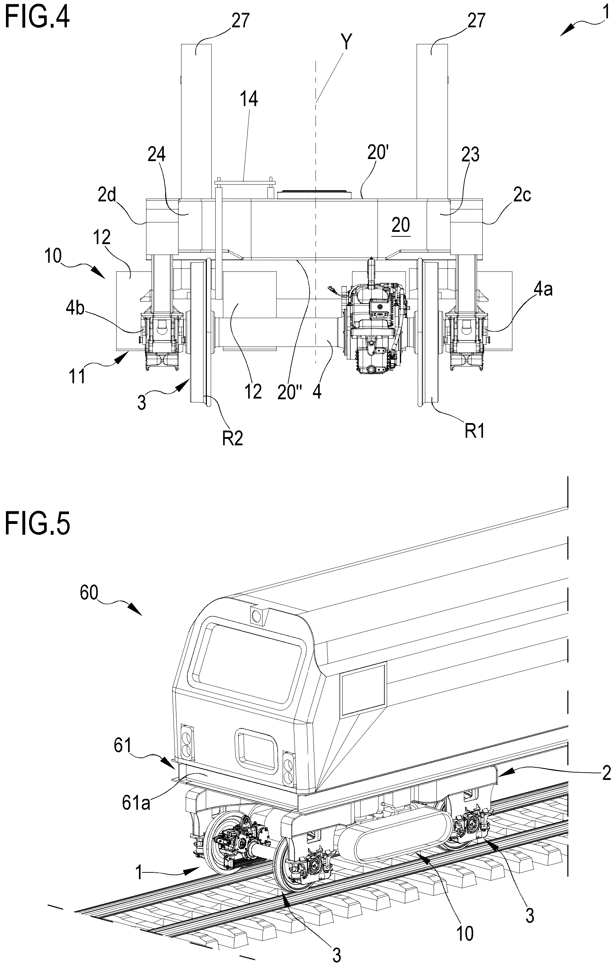

- Figures 2 to 4 are various views of a railway bogie of figure 1;
- Figure 5 is a partially exploded view of a railway bogie of figure 1;

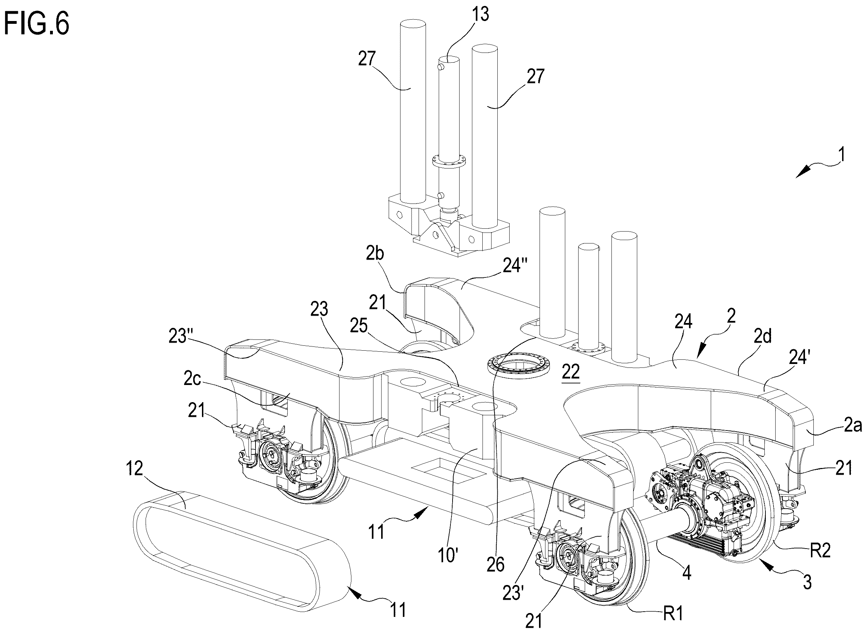

- Figure 6 is a further perspective view showing a front part of a railway car comprising a railway bogie;
- Figures 7 to 9 are schematic views showing different operative conditions of a railway bogie of figure 1,
- Figure 10 is a schematic view of a variant of the railway car according to the present disclosure.

### DEFINITIONS AND CONVENTIONS

It should be noted that in the detailed description corresponding parts illustrated in the various figures are indicated with the same numerical references. The figures could illustrate the object of the invention by means of representations not to scale; therefore, parts and components illustrated in the figures could regard exclusively schematic representations.

The terms "horizontal" or "vertical" used in relation to the truck or car refer to a condition of use of the same, for example during which the truck or railway car is disposed in correspondence of an area of installation and/or maintenance and/or removal of a railway line. In the condition of use the railway bogie comprises two or more wheels in contact with the ground or with the rails of a railway track to support a railway car.

By the term "component" of a railway line is meant at least one of: a railway span, one or more sleepers, rails, inert material (optionally ballast) of a railway ballast.

At least one of the railway bogie, the railway car and the railway vehicle described below and claimed may comprise/use at least one control unit responsible for the control of operative conditions implemented by the same. The control unit may be a single unit or be formed by a plurality of distinct control units depending on the design choices and operative requirements.

By "control unit" is meant a component of electronic type, which may comprise at least one of: a digital processor (CPU), an analog type circuit, or a combination of one or more digital processors with one or more analog type circuits. The control unit may be "configured" or "programmed" to execute some steps: this may be realized in practice with any means that allows to configure or to program the control unit. For example, in case of a control unit comprising one or more CPUs and one or more memories, one or more programs may be stored in appropriate memory banks connected to the CPU or CPUs; the program or programs contain instructions which, when executed by the CPU or CPUs, program or configure the control unit to execute the operations described in relation to the control unit. Alternatively, if the control unit is or comprises circuitry of analog type, then the circuit of the control unit may be designed to include circuitry configured, in use, to process electrical signals in such a way as to execute the steps relative to the control unit.

Parts of the described method may be realized by means of a data processing unit, or control unit, technically replaceable with one or more electronic computers designed to execute a portion of software or firmware program loaded on a memory support. Such software program may be written in any programming language of known type. The electronic computers, if in number equal to two or more, may be connected to each other by means of a data connection such that their computing powers are in any way shared; the same electronic computers may therefore be installed in positions even geographically different, realizing through the aforementioned data connection a distributed computing environment.

The data processing unit, or control unit, may be a general purpose processor configured to execute one or more parts of the method identified in the present disclosure through the software or firmware program, or be an ASIC or dedicated processor or an FPGA, specifically programmed to execute at least part of the operations of the method described here.

The memory support may be non-transitory and may be internal or external to the processor, or control unit, or data processing unit, and may - specifically - be a memory geographically located remotely with respect to the electronic computer. The memory support may be also physically divided into multiple portions, or in cloud form, and the software or firmware program may be physically provide portions stored on memory portions geographically divided among them.

By "actuator" is meant any device capable of causing a movement on a body, for example on command of the control unit (reception by the actuator of a command sent by the control unit). The actuator may be of electric type (for example an electric motor), pneumatic, mechanical (for example spring), hydraulic or of another type still.

The "track" may be defined as a flexible and inextensible element which, closed on itself, forms a coupling member between two pulleys. This term may refer to various types of devices, such as transmission belts, ropes and endless chains. In particular, a track may comprise a sort of chain that includes articulated plates, used around two or more wheels, for example pulleys.

By the term "railway track" of a railway line is meant the infrastructure comprising two rails, generally in steel, mounted on wooden or reinforced concrete sleepers by means of fixing systems or fixed on reinforced concrete slabs. If present, the sleepers are positioned on a base of gravel or ballast, called ballast, which serves to uniformly distribute the weight of railway vehicles and to guarantee the stability of the railway track.

### DETAILED DESCRIPTION

### Railway Car

With the reference number 60 is indicated a railway car for the maintenance of the ballast, designed to execute correction and maintenance interventions of the railway tracks, for example lifting and alignment operations of the rails, in order to guarantee the correct positioning of the railway line with respect to predetermined geometric parameters.

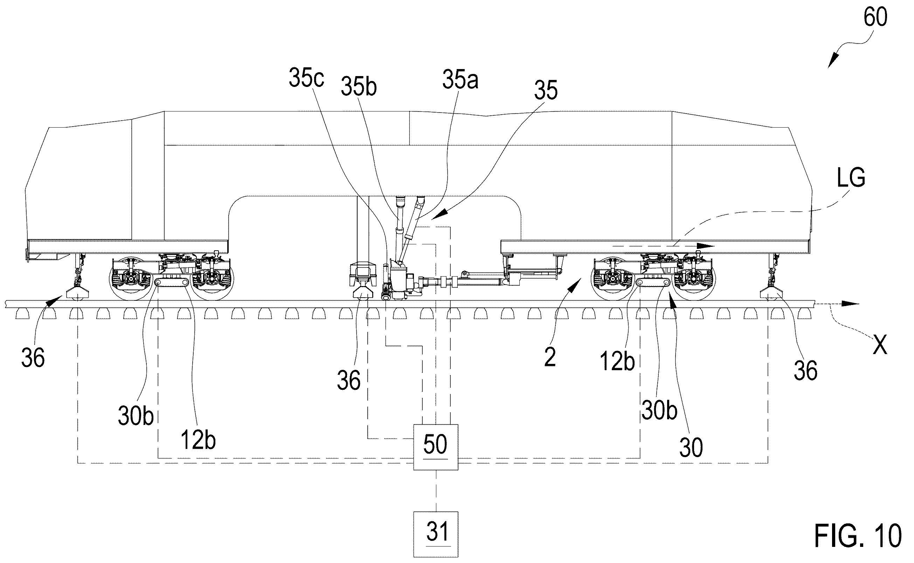

The railway car 60 comprises a frame 61 which represents a load-bearing structure on which are mounted equipment for the maintenance of the ballast. In an example the frame 61 of the railway car lies substantially on a plane extending longitudinally between a first and a second end portion 61a, 61b. As for example shown in figure 10, the railway car 60 may have a lifting unit 35 carried by the frame 61 of the railway car and configured to move vertically and transversely the railway track, in order to correct the positioning of the rails acting simultaneously on the vertical height and on the transverse position of the railway track. The lifting unit 35 may comprise a first vertical cylinder 35a configured to lift or lower a first rail, a second vertical cylinder 35b configured to lift or lower a second rail, and a transverse cylinder 35c configured to move transversely a sleeper to which the first and the second rail are fixed.

The railway car 60 may also comprise a measurement base 36 placed on the rails and configured to generate a measurement signal representative of a railway track positioned on the railway ballast. In particular, the measurement base 36 is configured to detect the geometry of the railway track and provide reference data for corrective interventions.

The railway car 60 may also have a sleeper replacement system configured to remove existing sleepers from the railway track and position new sleepers on the railway ballast. The sleeper replacement system may comprise gripping and handling means for the sleepers, a storage area for new sleepers, and extraction devices for worn sleepers. Furthermore, the railway car 60 may comprise a rail replacement system configured to remove existing rails from the track and position new rails, for example by means of lifting equipment, longitudinal rail handling means and fastening devices for positioning the new rails on the sleepers.

The railway car 60 may comprise a control unit 50 connected to the sleeper replacement system and/or to the rail replacement system to manage and coordinate the removal and laying operations of rails and sleepers. In particular, the control unit 50 may be configured to receive data relating to the track condition and to sequentially command the replacement operations, ensuring proper synchronization between the different phases of the railway infrastructure renewal.

The railway car 60 may furthermore comprise a graphical interface 31 configured to display an image representative of an ideal trajectory that the rails should assume. The graphical interface 31 allows the operator to compare the geometry of the railway track detected by the measurement base 36 with the design reference parameters, facilitating the correction operations. The graphical interface 31 may be integrated in a command station of the railway car and provide information in real time on the state of the interventions.

The control unit 50 may be configured to implement trajectory control functions as a function of the ideal trajectory displayed by the graphical interface 31 and of the measured trajectory detected by the measurement base 36. In particular, the control unit 50 may be configured to receive the measurement signal from the measurement base 36 and consequently, determine, as a function of the measurement signal, a measured trajectory of the rails. The control unit 50 may also be configured to compare the measured trajectory with the ideal trajectory displayed on the graphical interface 31 and command an auxiliary actuator 14 configured to rotate a railway bogie (1) about a vertical axis (Y) and/or to command drive motors 30 configured to drive a traction device (11) of the railway bogie, as a function of a difference between the measured trajectory and the ideal trajectory. This functionality allows an automatic or semiautomatic control of the positioning of the truck with respect to the railway line, facilitating the maintenance operations and improving the precision of the interventions.

The railway car 60 may comprise a box configured to contain a load, such as for example inert material like ballast, or sleepers or other railway components. Furthermore, the railway car 60 may comprise a cabin configured to contain safety devices, car driving devices, monitoring devices and car maneuvering devices. The railway car 60 comprises at least one railway bogie 1 configured to support and move the railway car both along the rails and on ground without railway tracks, for example in correspondence of areas of installation of the railway track, such as for example the railway ballast or zone at the side of the railway track. The railway bogie 1 comprises a frame 2 connectable to the frame 61 of the railway car 60, for example by means of a mechanical joint such as a spherical joint. The frame 2 represents the direct interface between the railway bogie 1 and the frame 61 of the car, being configured to transfer the loads and allow the necessary relative movements.

In an example, the frame 2 of the railway bogie extends longitudinally between a first and a second longitudinal portion 2a, 2b which define the length of the frame. The distance between the first and the second longitudinal portion 2a, 2b determines the overall length of the frame 2, which may be comprised between 2500 and 6000 mm, preferably between 3500 and 5000 mm. The frame 2 also has a first and a second side 2c, 2d whose maximum distance defines a width of the frame, comprised between 1500 and 3000 mm, preferably between 1800 and 2500 mm. The first and the second side 2c, 2d connect the first and the second longitudinal portion 2a, 2b of the frame 2.

The frame 2 may comprise a base body 20 configured to be constrained to the frame of the railway car. The base body 20 lies substantially on a plane and extends in length between the first and second longitudinal portion 2a, 2b and in width between the first and the second side 2c, 2d, defining the planimetric dimensions of the frame 2 of the railway bogie.

In an example, the base body 20 has a thickness comprised between an upper surface 20' and a lower surface 20" opposite to each other. The thickness of the base body 20 may be comprised between 180 and 500 mm, preferably between 200 and 450 mm. The lower surface 20" of the base body is configured to be facing towards the ground S in condition of use of the railway bogie 1.

The base body 20 may comprise a central portion 22 configured to be constrained to the frame of the railway car and serve as interface with the frame 61 of the car, integrating fixing elements or seats for mechanical joints.

The base body 20 may comprise a first and a second shoulder 23, 24 opposite to each other and positioned laterally to the central portion 22. The first and second shoulder 23, 24 extend in length between the first and the second longitudinal portion 2a, 2b of the frame 2, defining in fact such longitudinal portions as well as the first and the second side 2c, 2d of the base body 20. The first and the second shoulder 23, 24 are united in a single piece to the central portion 22, constituting a monolithic integrated structure.

The first shoulder 23 extends in length between a first and a second end portion 23', 23", along the longitudinal extension direction of the frame 2. Similarly, the second shoulder 24 extends in length between a first and a second end portion 24', 24". The first ends 23', 24' of the first and second shoulder are spaced from each other and define the first longitudinal portion 2a of the frame 2. The second ends 23", 24" of the first and second shoulder are similarly spaced from each other and define the second longitudinal portion 2b of the frame 2. This configuration gives to the frame 2 a substantially "H" shape in planimetric view.

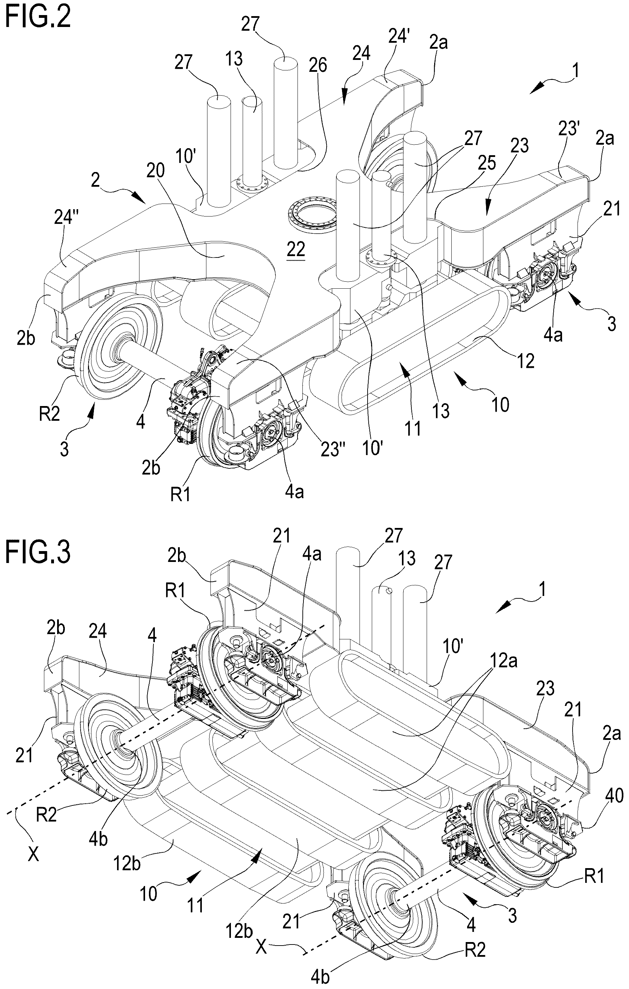

As shown for example in figure 2, the first and the second shoulder 23, 24 may have, in correspondence of their central portion, a respective recess 25, 26, each of which defines a lateral recess which extends from the respective side towards the central portion 22 of the frame 2 to house components of the movement system, as better described hereinafter.

The frame 2 of the railway bogie may furthermore comprise at least one support 21 emerging from the base body 20 and configured to engage an axle 3. The support 21 emerges from the base body 20, in particular from the lower surface 20", in direction of the ground S in condition of use, mechanically connecting the axle 3 to the frame 2. In an example, the support 21 may have a load-bearing structure realized by means of plates in metallic material, a suspension and a bearing for the rotary engagement of the axle.

In an example, the frame 2 may comprise a single support 21 for a single axle 3. Preferably, as illustrated in the figures, the frame 2 comprises two spaced supports 21 configured to engage opposite end portions of a same axle 3.

When the railway bogie 1 comprises two axles 3, the frame 2 comprises at least one support 21 emerging in correspondence of the first longitudinal portion 2a of the frame to engage a first axle, and at least one support 21 emerging in correspondence of the second longitudinal portion 2b of the frame to engage a second axle. In the configuration with base body 20 provided with first and second shoulder 23, 24, each shoulder carries supports 21 in correspondence of its own end portions. The supports 21 carried by the first end portions 23', 24' engage opposite end portions of the first axle 3, while the supports 21 carried by the second end portions 23", 24" engage opposite end portions of the second axle 3.

The railway bogie 1 comprises a first and a second axle 3 engaged to the frame 2, each of which comprises a shaft 4 on which is fixed at least one railway wheel configured to contact and move along a rail of a railway line. In the illustrated configurations, each axle 3 carries a first and a second railway wheel R1, R2, configuring the bogie for the movement on double-rail railway track.

The shaft 4 extends longitudinally between a first and a second end portion 4a, 4b and has a substantially cylindrical shape. The axle 3 is constrained to the frame 2 by means of the shaft 4; in particular, the first and the second end portion 4a, 4b of the shaft 4 are constrained to the supports 21 disposed below the first and/or second shoulder 23, 24 of the base body 20.

When the railway bogie 1 comprises a first and a second axle 3, the shaft 4 of the first axle is engaged to the supports 21 constrained to the first ends 23', 24' of the first and second shoulder 23, 24, while the shaft 4 of the second axle is engaged to the supports 21 constrained to the second ends 23", 24" of the first and second shoulder 23, 24.

The first railway wheel R1 is fixed in correspondence of the first end portion 4a of the shaft 4, while the second railway wheel R2 is fixed in correspondence of the second end portion 4b of the shaft 4. During the use of the railway bogie 1 for the movement along the railway line, the axle 3 rotates around an axis of rotation X passing through the center of the shaft 4 and of the railway wheels. The axis of rotation X is substantially parallel to the plane of lying of the base body 20. When the bogie comprises two axles, the respective axes of rotation X are parallel to each other.

The axles 3 may be idle, comprising only the shaft 4 and the railway wheels without own motorization, or they may be motorized. A motorized axle comprises a motorization which allows the movement of the railway bogie along the rails, configuring the wheels as driving wheels. For example, the motorized axle may comprise a drive member keyed solidly to the shaft 4 to rotate unitarily with it around the axis of rotation X. The drive member is fixed stably to the axle 3, for example by means of an interference system or by means of a key and may be disposed in proximity of a railway wheel or at a middle zone of the shaft, between the first and the second end portion 4a, 4b. The drive member is connected, by means of a transmission, to at least one motor configured to determine the rotation of the shaft 4 and therefore of the railway wheels around the axis of rotation X. The motor may comprise an electric motor fed by a battery or by a current generator.

In the figures is illustrated a railway bogie 1 comprising a first and a second axle 3, in which only one axle is motorized. However, configurations are possible with two idle type axles, or with both motorized axles. The activation of the motor of the axle 3 may be commanded by the control unit 50 of the railway car or by a controller of the railway bogie 1 connected to the control unit 50 of the railway car 60.

The railway bogie 1 may comprise a movement system 10 carried by the frame 2 and configured to contact the ground S, allowing the movement of the railway bogie 1 on ground without rails. The movement system 10 is directly constrained to the frame 2 of the railway bogie 1 and does not have any direct connection with the frame 61 of the railway car 60. The movement system 10 allows the railway bogie 1 to operate in two distinct modes: a mode on rail, in which the railway wheels are in contact with the rails, and a mode on ground, in which the movement system 10 is in contact with the ground.

In an example, the movement system 10 is configured to define two operative positions:
- a first operative position in which the movement system 10 is spaced from the ground S and the axle 3 is configured to contact and move along the rails of the railway line;
- a second operative position in which the movement system 10 is in contact with the ground S to space the axle 3 from the ground, configuring the axle to be spaced both from the ground and from the rails.

The movement system 10 may comprise a traction device 11 having at least one track 12 configured to contact the ground S and allow the movement of the railway bogie 1 on the ground. In the illustrated configurations, the traction device 11 comprises a plurality of tracks 12, although alternative configurations with traditional wheels are possible.

The traction device 11 of the movement system 10 is movable in approach and withdrawal with respect to the frame 2 of the railway bogie, allowing to define the first and the second operative position of the movement system 10. In the first operative position, the traction device 11 is spaced from the ground S. In the second operative position, the traction device 11 is in contact with the ground and lifts the axle 3 with respect to the ground, so that the railway bogie 1 is supported only by the traction device 11.

The movement system 10 may comprise at least one actuator 13 engaged, on one side, to the frame 2 of the railway bogie 1 and, on the other side, to the traction device 11. The actuator 13 connects the traction device 11 to the frame 2 and is configured to move the traction device 11 in approach and withdrawal with respect to the frame 2. In an example, the control unit 50 is connected to the actuator 13 to command the activation of the latter and therefore command the positioning of the movement system 10 in the first and second operative position. The actuator 13 may for example have a hydraulic cylinder, a pneumatic cylinder or an electric motor.

The movement system 10 may comprise a single actuator 13 or a plurality of actuators 13 carried by the base body 20. Preferably, the movement system 10 comprises two actuators 13 disposed respectively in correspondence of the first and of the second side 2c, 2d of the frame 2, in particular in the recesses 25, 26 of the first and second shoulder 23, 24.

The movement of the traction device 11 generated by the actuator 13 occurs along a vertical direction, substantially orthogonal to the plane of lying of the base body 20. To guide such movement, the movement system 10 may comprise one or more uprights 27 configured to slide in respective openings present on the base body 20. The movement system 10 may comprise a support 10' constrained to the base body 20, for example inside the recess 25 or 26 of the first and/or second shoulder 23, 24. The support 10' has at least one through opening which allows an upright 27 engaged to the traction device 11 to slide inside it, guiding the movement of the traction device 11 in approach and withdrawal with respect to the frame 2. The support 10' furthermore stably engages at least one actuator 13, which is therefore connected on one side to the support 10' and on the other side to the traction device 11.

The upright 27 is configured to maintain in position the traction device 11 with respect to the frame 2 in the second operative position of the movement system, when the traction device 11 is in contact with the ground S. In the illustrated configurations, the movement system 10 has two supports 10' respectively constrained in the recesses 25, 26 of the first and second shoulder 23, 24. Each support 10' may have three through openings: a central opening for the actuator 13 and two lateral openings for as many uprights 27 constrained to the traction device 11.

When the railway bogie 1 comprises a first and a second axle 3 spaced from each other, the movement system 10 is interposed between the first and second axle. In particular, the traction device 11 is interposed between the first and second axle, maintaining substantially a same minimum distance from each of them. The traction device 11, when in contact with the ground, is movable by rotation with respect to the frame 2 around a vertical axis Y orthogonal to the plane of lying of the frame 2, allowing the railway bogie to steer and follow non-rectilinear trajectories when the movement system 10 is in the second operative position. The movement system 10 comprises at least one auxiliary actuator 14 connected, on one side, to the traction device 11 and, on the other side, to the frame 2 of the railway bogie. The auxiliary actuator 14 is configured to rotate the traction device 11 with respect to the frame 2 of the railway bogie around the vertical axis Y, optionally when the traction device is contacting the ground. In an example, the auxiliary actuator 14 may comprise a hydraulic cylinder, a pneumatic cylinder or an electric motor.

As previously mentioned, the traction device 11 comprises a plurality of tracks 12 side by side and aligned along a direction parallel to the axes of rotation X of the first and of the second axle 3, thus guaranteeing an optimal distribution of the traction forces and a wide contact surface with the ground.

The plurality of tracks 12 has one or more left tracks 12a located at the first side 2c of the frame 2, and one or more right tracks 12b located at the second side 2d of the frame 2. This lateral subdivision of the tracks allows a differentiated control of the traction on the two sides of the truck, facilitating the steering maneuvers.

The railway bogie 1 may also comprise a plurality of drive motors 30, each of which is associated with at least one respective track of the plurality of tracks 12. The plurality of drive motors 30 comprises one or more left drive motors 30a associated with the left tracks 12a, and one or more right drive motors 30b associated with the right tracks 12b to allow an independent control of the tracks on the two sides of the truck. A control unit 50 is connected to the plurality of drive motors 30 and configured to command the left drive motors 30a in an independent manner with respect to the right drive motors 30b to allow steering maneuvers and rotation on place.

When it is necessary to execute a rotation or a zero turn maneuver of the railway car, the control unit 50 may be configured to simultaneously control the left drive motors 30a and the right drive motors 30b so as to determine a movement of the left tracks 12a in an opposite direction with respect to a direction of movement of the right tracks 12b, allowing rotation on the spot of the railway bogie.

When instead it is necessary to move the railway car along the railway ballast according to a straight trajectory or in any case without executing rotations, the control unit 50 may be configured to control the left drive motors 30a and the right drive motors 30b according to the same direction of movement, thus ensuring a coordinated and stable advancement of the vehicle.

In an example, the left tracks 12a may comprise two or more left tracks mutually adjacent and aligned parallel to the axes of rotation X of the first and of the second axle 3. Similarly, the right tracks 12b may comprise two or more right tracks mutually adjacent and aligned parallel to the axes of rotation X of the first and of the second axle 3.

In this scenario where the left tracks 12a comprise two or more adjacent tracks and the right tracks 12b comprise two or more adjacent tracks, the control unit 50 is configured to:
- commanding the left drive motors 30a to determine a scrolling of said two or more left tracks in a same direction;
- commanding the right drive motors 30b to determine a scrolling of said two or more right tracks in a same direction.

Referring for example to figure 3, the plurality of tracks 12 defines a contact surface having a dimension equal to or greater than a minimum distance that occurs between the first and the second side 2c, 2d of the frame 2, where such minimum distance is measured parallel to the axes of rotation X of the first and of the second axle 3. This dimensioning guarantees a wide base of support which confers stability to the truck in the second operative position.

Each track of the plurality of tracks 12 develops in length parallel to a longitudinal extension direction LG of the railway bogie 1 which joins the first axle to the second axle 3. The length of each track is greater than 2/3, preferably greater than 3/4, of a minimum distance between the first axle and the second axle of the railway bogie measured parallel to the longitudinal extension direction LG of the railway bogie. This extended longitudinal dimensioning allows to effectively distribute the weight of the truck on the ground and to reduce the specific pressure on the ground, improving the traction also on yielding grounds.

It should be noted how the control unit 50 may be an integral part of the railway car 60 or may be a controller of the railway bogie 1 connected to the control unit of the railway car.

The railway car 1 may also comprise one or more manipulators and/or a radio control configured to generate command signals for the movement of each track of the plurality of tracks 12 of the railway bogie. In an example, the control unit 50 is connected to the manipulators and/or to the radio control and is configured to receive the command signal generated by these devices, process such signal to determine an appropriate control signal, and therefore move each track of the plurality of tracks 12 based on the control signal thus determined.

The movement of each track as a function of the control signal may occur according to different operative modes. A first mode provides for the command of the actuator 13 to realize a vertical movement of the tracks in approach and in withdrawal with respect to the frame 2 of the railway bogie 1. A second mode provides instead for the command of the auxiliary actuator 14 to determine a rotation of the tracks around the vertical axis Y orthogonal to the plane of lying of the frame 2, thus allowing steering maneuvers. A third mode provides for the direct command of the drive motors 30 to determine an advancement of the railway car on the railway ballast or on the ground. These different modes may be combined with each other to realize complex movements of the railway bogie.

### Method

The present invention also concerns a method for the movement of a railway car 60 in accordance with the description reported above. The method comprises the steps of:
- disposing the railway car 60 on a railway line in such a way that the at least one wheel of the axle 3 is in support on at least one rail,
- moving the railway car 60 on the at least one rail, along the railway line.

The movement system 10 of the railway bogie 1, during the movement of the railway car on the rail is spaced from the rail. In fact, during the movement of the car 60 along the rail, only the axles are in contact with the rail while the movement system 10 is in the first operative position, that is spaced from the rail and from the ground S.

In detail, the method furthermore comprises the following steps:
- placing in contact the movement system 10 of a railway bogie 1 with the ground S in such a way as to space from the ground the axle 3 of said railway bogie,
- actuating the movement system 10 to allow the same to move the railway car, optionally along a section of or with respect to the railway line.

The step of placing in contact the movement system 10 with the ground S comprises the placing on the ground of the traction device 11. The step of actuating the movement system 10 comprises a step of activation of the traction device 11 to allow the latter to move the railway car 60, optionally on the ground.

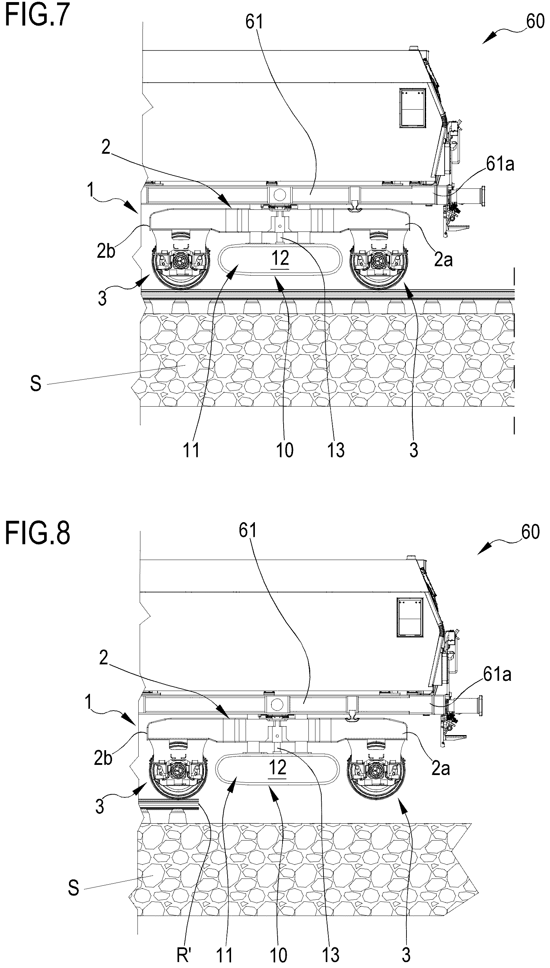

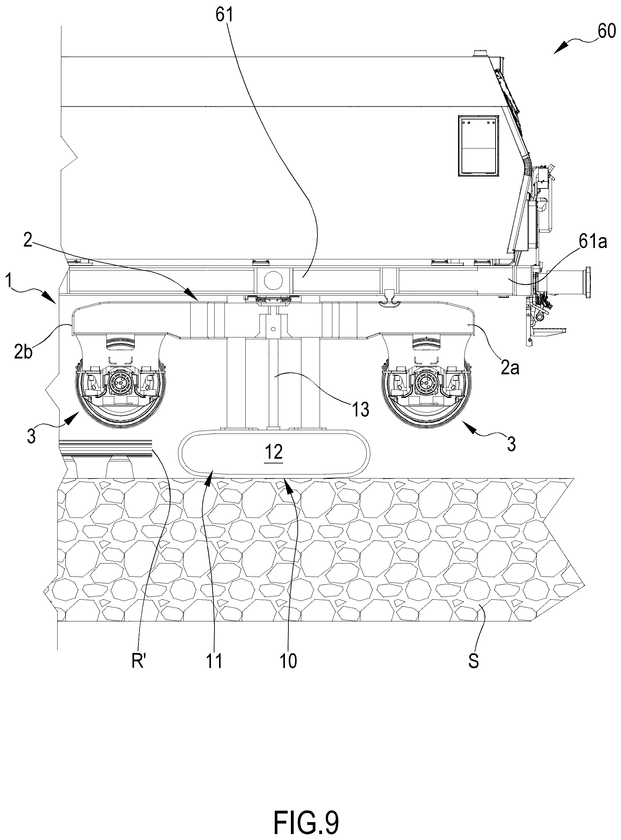

In still greater detail the method comprises the steps of:
- moving the railway car 60 on the at least one rail, along the railway line, in which the railway car 60 comprises the railway bogie 1, in which during said movement step the axle 3 of the railway bogie 1 is in contact with the rail while the movement system 10 is spaced from the rail and from the ground (figure 7),
- disposing the railway bogie 1 of the railway car 60 at a terminal portion R' of the rail in such a way that at least the movement system 10, optionally the traction device 11, of the railway bogie 1 is facing the ground at a zone in which the rail is not present (figure 8),
- subsequently, moving the movement system 10 to bring at least a part of the latter, optionally the traction device 11, in contact with the ground and lift the axle 3 of said railway bogie with respect to the rail (figure 9),
- subsequently, actuating the movement system 10, optionally the traction device 11, in such a way as to move the entire railway car 60 with respect to the rail.

In fact, the movement system 10, when the traction device 11 is placed in contact with the ground S, allows to drag the railway car 60, optionally a plurality of cars 60 along the rail, in particular drag the part of the car remaining still in support on the rail, along the rail.

### Railway vehicle

The invention also concerns a railway vehicle mobile along a railway line, for example on a railway track, comprising at least one railway car 60 in accordance with what described above. For example, the railway vehicle may comprise at least one of:
- one or more railway cars for the transport of components and for the movement of inert material (for example ballast of a railway ballast), that is one or more railway cars joined together,
- a railway car for the movement of sleepers, that is one or more railway cars joined together.

## Claims

1. Railway car for the maintenance of a railway ballast comprising:
- at least one frame (61) configured to support one or more components of the railway car,
- at least one railway bogie (1) comprising:
∘ a frame (2) constrained to the frame (61) of the railway car (60),
∘ a first and a second axle (3) engaged to the frame (2) of the railway bogie, each axle (3) comprising a shaft (4) on which is fixed at least one railway wheel configured to contact and move along a rail of a railway line,
∘ a movement system (10) carried by the frame (2) of the railway bogie (1), configured to contact the ground (S) and allow the movement of the railway bogie (1).

2. Railway car according to claim 1, wherein the movement system (10) is directly constrained to the frame (2) of the railway bogie (1).

3. Railway car according to any one of the preceding claims, wherein the movement system (10) is configured to define the following operative positions:
- a first operative position in which the movement system (10) is configured to be spaced from the ground (S), wherein the axle (3), in said first operative position, is configured to contact and move along at least one rail of a railway line,
- a second operative position in which the movement system (10) is configured to contact the ground to space the axle (3) from the ground, wherein the axle (3), in said second operative position, is configured to be spaced from the ground and from the at least one rail of a railway line.

4. Railway car according to any one of the preceding claims, wherein the movement system (10) comprises a traction device (11) having at least one track configured to contact the ground (S) and allow the movement of the railway bogie (1),
wherein the traction device (11) of the movement system (10) is movable in approach and withdrawal with respect to the frame (2), optionally to define said first and second operative position of the movement system (10),
wherein the movement system (10) comprises at least one actuator (13) engaged, on one side, to the frame (2) of the railway bogie (1) and, on the other side, to the traction device (11), wherein the actuator (13) connects the traction device (11) to the frame (2) and is configured to move the traction device (11) in approach and withdrawal with respect to the frame (2) of the railway bogie.

5. Railway car according to the preceding claim, wherein the traction device (11) of the movement system (10), when in contact with the ground, is movable by rotation with respect to the frame (2) of the railway bogie around a vertical axis (Y) orthogonal to the plane of lying of the frame (2) of the railway bogie, wherein the movement system (10) comprises at least one auxiliary actuator (14) connected, on one side, to the traction device (11) and, on the other side, to the frame (2) of the railway bogie, said auxiliary actuator (14) being configured to rotate the traction device (11) with respect to the frame (2) of the railway bogie.

6. Railway car according to any one of the preceding claims, wherein the traction device (11) is interposed between the first and the second axle.

7. Railway car according to any one of the preceding claims from 4 to 6, wherein the traction device (11) comprises a plurality of tracks (12) side by side and aligned along a direction parallel to axes of rotation (X) of the first and of the second axle (3),
wherein said plurality of tracks includes one or more left tracks (12a) and one or more right tracks (12b) at opposite sides of the frame (2) of the railway bogie.

8. Railway car according to any one of the preceding claims, wherein the frame (2) extends longitudinally between a first and a second longitudinal portion (2a, 2b), wherein the frame (2) has a first and second side (2c, 2d) which connect the first and second longitudinal portion (2a, 2b) of the frame (2), wherein the first and second axle are respectively engaged at the first and second longitudinal portion (2a, 2b) of the frame (2),
wherein when the present claim depends on the preceding claim, said one or more left tracks (12a) are located at the first side (2c) of the frame (2),
wherein said one or more right tracks (12b) are located at the second side (2d) of the frame (2).

9. Railway car according to any one of the two preceding claims, wherein the railway bogie (1) comprises a plurality of drive motors (30), each of which associated with at least one respective track of said plurality of tracks (12),
wherein said plurality of drive motors (30) comprises:
- one or more left drive motors (30a) associated with a respective one of said one or more left tracks (12a),
- one or more right drive motors (30b) associated with a respective one of said one or more right tracks (12b).

10. Railway car according to the preceding claim comprising a control unit (50) connected to said plurality of drive motors (30) and configured to command said one or more left drive motors (30a) in an independent manner with respect to said one or more right drive motors (30b),
wherein the control unit (50) is configured to command simultaneously said one or more left drive motors (30a) and said one or more right drive motors (30b) to determine a scrolling of said one or more left tracks (12a) in opposite direction with respect to a direction of scrolling of said one or more right tracks (12b).

11. Railway car according to any one of the two preceding claims, wherein said one or more left tracks (12a) comprise two or more left tracks mutually adjacent and aligned parallel to axes of rotation of the first and of the second axle (3),
wherein said one or more right tracks (12b) comprise two or more right tracks mutually adjacent and aligned parallel to axes of rotation of the first and of the second axle (3),
wherein a/the control unit (50) is configured to:
- commanding said one or more left drive motors (30a) to determine a scrolling of said two or more left tracks in a same direction,
- commanding said one or more right drive motors (30b) to determine a scrolling of said two or more right tracks in a same direction.

12. Railway car according to any one of the preceding claims when dependent on claim 7, wherein said plurality of tracks (12) defines a contact surface having a dimension equal to or greater than a minimum distance that occurs between a/the first and a/the second side (2c, 2d) of the frame (2) of the railway bogie, wherein said minimum distance is measured parallel to the axes of rotation (X) of the first and of the second axle (3).

13. Railway car according to any one of the preceding claims when dependent on claim 7, wherein each track of said plurality of tracks (12) develops in length parallel to a longitudinal extension direction (LG) of the railway bogie (1) which joins the first axle to the second axle (3),
wherein said length of each track is greater than 2/3, optionally greater than 3/4, of a minimum distance between the first axle and the second axle of the railway bogie measured parallel to the longitudinal extension direction (LG) of the railway bogie.

14. Railway car according to any one of the preceding claims when dependent on claim 7, comprising one or more manipulators and/or a radio control configured to generate command signals for the movement of each track of said plurality of tracks (12),
wherein a/the control unit (50) is connected to said one or more manipulators and/or to the radio control and is configured to:
- receiving the command signal generated by said one or more manipulators and/or by the radio control,
- determining a control signal as a function of the received command signal,
- moving each track of said plurality of tracks (12) as a function of the control signal,
wherein when the present claim is dependent on claim 5 or 9, moving each track of said plurality of tracks (12) as a function of the control signal comprises at least one of:
- commanding a movement of said tracks in approach and in withdrawal with respect to the frame (2) of the railway bogie (1),
- commanding the auxiliary actuator (14) to determine a rotation of said tracks about the vertical axis (Y) orthogonal to the plane of lying of the frame (2) of the railway bogie (1),
- commanding the drive motors (30) to determine an advancement of the railway car on the railway ballast.

15. Railway car according to any one of the preceding claims when dependent on claim 5 or 9, comprising:
a measurement base (36) placed on rails and configured to generate a measurement signal representative of a positioning of a railway track,
a graphical interface (31) configured to display an image representative of an ideal trajectory that the rails should assume,
wherein a/the control unit (50) is configured to:
- receiving the measurement signal from the measurement base (36),
- determining, as a function of the measurement signal, a measured trajectory of the rails,
- comparing the measured trajectory with the ideal trajectory,
- commanding the auxiliary actuator (14) and/or the drive motors (30) as a function of a difference between the measured trajectory and the ideal trajectory.
